# EUROPEAN PATENT APPLICATION

(11) **EP 4 819 338 A1**
(43) Date of publication of application: **07.10.2026**
(21) Application number: 26154247.6
(22) Date of filing: 27.01.2026
(51) Int. Cl.: H01M 50/296, H01R 13/11, H01M 50/247, H01R 13/18, H01R 13/03, H01R 13/187

(54) **TERMINAL ASSEMBLY, BATTERY PACK, AND ELECTRIC POWER TOOL SYSTEM**

(30) Priority: 03.04.2025 CN 202510421077
(71) Applicant: Nanjing Chervon Industry Co., Ltd., Nanjing, Jiangsu 211106 (CN)
(72) Inventor: YAN, Jianqiao, Nanjing, Jiangsu 211106 (CN); WU, Zhiyong, Nanjing, Jiangsu 211106 (CN); QIAN, Haihang, Nanjing, Jiangsu 211106 (CN)
(74) Representative: Sun, Yiming

(57) **Abstract**

The provided is a terminal assembly, a battery pack, and an electric power tool system. The terminal assembly includes: a plurality of terminals, where each of the terminals is configured to be electrically connected to a contact matched with the terminal; at least one of the terminals includes a first member and a second member; the first member is configured to conduct a current; the second member is configured to apply a pressure to the first member; a ratio of a thickness of the first member to a thickness of the second member is greater than or equal to 0.1 and less than or equal to 20; the first member provides a surface-to-surface contact region for the contact; and in the contact region, the first member and the contact mate with each other.

## Description

### TECHNICAL FIELD

The present disclosure relates to the technical field of discharging of battery packs in power tools, and in particular to a terminal assembly, a battery pack, and an electric power tool system.

### BACKGROUND

Most output electrodes used by existing battery packs can achieve an 80-A continuous discharge. However, this 80-A continuous discharge capacity no longer meets the discharge requirements of power tools with high power. In order to meet the discharge requirements of the electric power tools with high power, improvements have been made to the output electrodes of the existing battery packs.

Nevertheless, the terminal structures of existing power tools, as well as the line-contact electrical connection methods between the terminals of electric power tools and the output electrodes of battery packs, cannot support a high-current continuous discharge capacity.

This part is intended to provide background information related to the present disclosure, and does not necessarily constitute prior art.

### SUMMARY

An objective of the present disclosure is to solve or at least mitigate a part or all of the above problems. In view of this, an objective of the present disclosure is to provide a terminal assembly, a battery pack, and an electric power tool system, so as to achieve the high-current continuous discharge capacity.

To achieve the above objective, the present disclosure adopts the following technical solutions:
A terminal assembly includes:
a plurality of terminals, where each of the terminals is configured to be electrically connected to a contact matched with the terminal; at least one of the terminals includes a first member and a second member; the first member is configured to conduct a current; and the second member is configured to apply a pressure to the first member; and
a ratio of a thickness of the first member to a thickness of the second member is greater than or equal to 0.1 and less than or equal to 20; the first member provides a surface-to-surface contact region for the contact; and in the contact region, the first member and the contact mate with each other.

In some embodiments, the thickness of the first member is 0.6 mm, 0.8 mm, 0.9 mm, or 1 mm.

In some embodiments, the thickness of the second member is 0.3 mm, 0.4 mm, 0.5 mm, or 0.6 mm.

In some embodiments, a material of the first member includes a copper alloy; and a material of the second member includes stainless steel.

In some embodiments, the contact region of the first member with the contact is nickel-plated, and/or, the contact region of the first member with the contact is silver-plated.

In some embodiments, the contact region includes a plurality of disconnected contact sub-regions.

In some embodiments, a total area of the contact region is greater than or equal to 4 mm².

In some embodiments, an area of each of the contact sub-regions is greater than or equal to 0.5 mm².

A battery pack includes:
a housing;
a plurality of battery cells that are accommodated in the housing;
an electric power tool interface that comprises a plurality of terminals, each of the terminals being configured to be electrically connected to a contact matched with the terminal; and
a circuit board that is accommodated in the housing, and electrically connected to the electric power tool interface, a controller being disposed on the circuit board, where
the terminal provides a surface-to-surface contact region for the contact; in the contact region, the terminal and the contact mate with each other; and a maximum continuous discharge current of the battery pack allowed by the controller is greater than or equal to 100 A.

In some embodiments, the contact region includes a plurality of disconnected contact sub-regions.

In some embodiments, a total area of the contact region is greater than or equal to 4 mm².

In some embodiments, an area of each of the contact sub-regions is greater than or equal to 0.5 mm².

In some embodiments, the terminal includes a first member and a second member; the first member is configured to conduct a current; and the second member is configured to apply a pressure to the first member.

In some embodiments, the contact region is disposed on the first member.

In some embodiments, a surface of the contact region is nickel-plated, and/or, the surface of the contact region is silver-plated.

An electric power tool system includes an electric power tool, a first battery pack, and a second battery pack, where
the power tool includes:
a machine housing;
an electric motor that is accommodated in the machine housing;
a working head that is configured to be driven by the electric motor; and
a battery pack interface that includes a plurality of contacts, and is configured to be connected to a battery pack to supply power to the electric motor;
the first battery pack includes:
   a housing;
   a plurality of battery cells that are accommodated in the housing;
   a first power tool interface that includes a plurality of first terminals, the first terminals being configured to be electrically connected to the contacts, respectively; and
   the second battery pack includes:
      a housing;
      a plurality of battery cells that are accommodated in the housing;
      a second power tool interface that includes a plurality of second terminals, the second terminals being configured to be electrically connected to the contacts, respectively;
      the first terminal provides a linear first contact region for the corresponding contact; the second terminal provides a surface-to-surface second contact region for the corresponding contact; and a width of the second contact region is greater than or equal to three times a width of the first contact region.

In some embodiments, a height of the first contact region is the same as a height of the second contact region.

In some embodiments, a release date of the first battery pack is earlier than January 1, 2025; and a release date of the second battery pack is later than January 1, 2025.

In some embodiments, the second terminal includes a first member and a second member; the first member is configured to conduct a current; and the second member is configured to apply a pressure to the first member.

In some embodiments, a thickness of the first member is 0.6 mm, 0.8 mm, 0.9 mm, or 1 mm.

In some embodiments, a thickness of the second member is 0.3 mm, 0.4 mm, 0.5 mm, or 0.6 mm.

In some embodiments, a total area of the second contact region is greater than or equal to 4 mm².

In some embodiments, a surface of the second contact region is nickel-plated, and/or, the surface of the second contact region is silver-plated.

In some embodiments, a maximum discharge current allowed by the electric power tool is greater than or equal to 100 A.

In some embodiments, the electric power tool is a chainsaw.

The present disclosure has the following beneficial effects: Since the first member in the terminal is configured to be electrically connected to the contact to conduct the current, and the second member is configured to apply the pressure to the first member, the first member can apply a large clamping force to the contact, thereby achieving stable power transmission. The ratio of the first thickness to the second thickness can be greater than or equal to 0.1 and less than or equal to 20, the first member provides the surface-to-surface contact region for the contact, and the first member and the contact can mate with each other in the contact region, such that when the contact is inserted into the terminal, a large contact area between the terminal and the contact can be achieved. This can effectively reduce a contact resistance to achieve high-current continuous transmission.

### BRIEF DESCRIPTION OF THE DRAWINGS

FIG. 1A is a schematic structural view of a terminal according to the present disclosure;
FIG. 1B is a schematic structural view of the terminal shown in FIG. 1A along a first viewing angle;
FIG. 1C is a schematic structural view of the terminal shown in FIG. 1A along a second viewing angle;
FIG. 1D is a schematic structural view of the terminal shown in FIG. 1A along a third viewing angle;
FIG. 2A is a schematic structural view of the terminal shown in FIG. 1A and a contact in a clamped state;
FIG. 2B is a schematic structural view of the terminal shown in FIG. 1A and a contact in a clamped state from another viewing angle;
FIG. 3A is a schematic structural view of another terminal according to the present disclosure;
FIG. 3B is a schematic view of the terminal shown in FIG. 3A and a contact in a clamped state;
FIG. 4A is a schematic structural view of still another terminal according to the present disclosure;
FIG. 4B is a schematic structural view of the terminal shown in FIG. 4A along a first viewing angle;
FIG. 4C is a schematic structural view of the terminal shown in FIG. 4A along a second viewing angle;
FIG. 5A is a schematic structural view of still another terminal according to the present disclosure;
FIG. 5B is a schematic structural view of the terminal shown in FIG. 5A along a first viewing angle;
FIG. 5C is a schematic structural view of the terminal shown in FIG. 5A along a second viewing angle;
FIG. 6A is a schematic structural view of still another terminal according to the present disclosure;
FIG. 6B is a schematic structural view of the terminal shown in FIG. 6A along a first viewing angle;
FIG. 6C is a schematic structural view of the terminal shown in FIG. 6A along a second viewing angle;
FIG. 7A is a schematic structural view of still another terminal according to the present disclosure;
FIG. 7B is a schematic structural view of the terminal shown in FIG. 7A from a first viewing angle;
FIG. 7C is a schematic structural view of the terminal shown in FIG. 7A from a second viewing angle;
FIG. 8A is a schematic structural view of still another terminal according to the present disclosure;
FIG. 8B is a schematic structural view of the terminal shown in FIG. 8A from a first viewing angle;
FIG. 8C is a schematic structural view of the terminal shown in FIG. 8A from a second viewing angle;
FIG. 9 is a schematic structural view of a battery pack according to the present disclosure;
FIG. 10 is an exploded view of a battery pack according to the present disclosure;
FIG. 11 is a system diagram of an electric power tool system according to the present disclosure;
FIG. 12 is a system diagram of another power tool system according to the present disclosure;
FIG. 13 is a schematic structural view of an electric power tool from another viewing angle;
FIG. 14A is a schematic structural view of a terminal and a contact in a clamped state according to a prior art; and
FIG. 14B is a schematic structural view of FIG. 14A from another viewing angle.

### DETAILED DESCRIPTION OF THE EMBODIMENTS

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

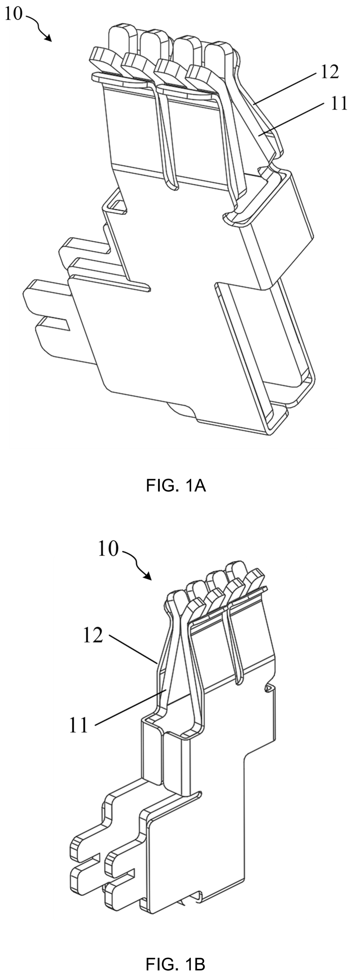

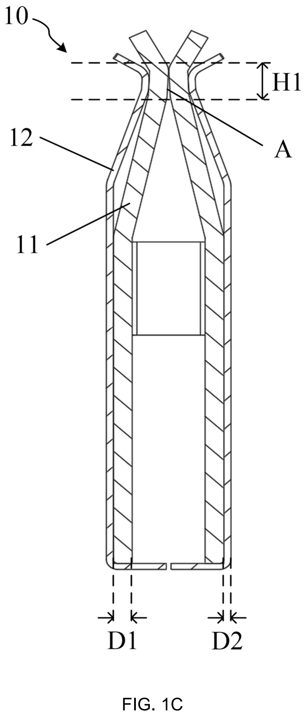

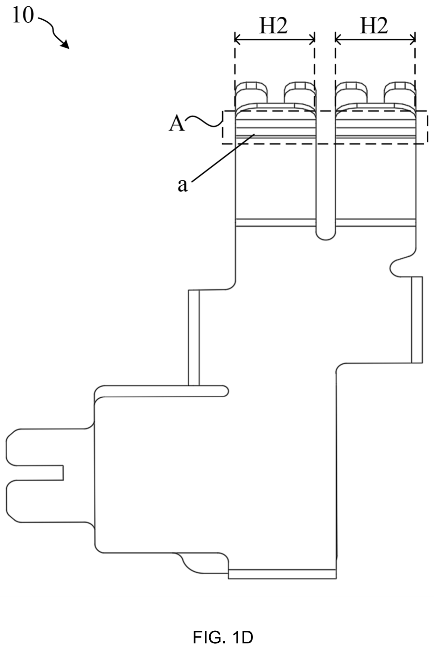

The present disclosure provides a terminal assembly, including a plurality of terminals. FIG. 1A is a schematic structural view of a terminal according to the present disclosure. FIG. 1B is a schematic structural view of the terminal shown in FIG. 1A along a first viewing angle. FIG. 1C is a schematic structural view of the terminal shown in FIG. 1A along a second viewing angle. FIG. 1D is a schematic structural view of the terminal shown in FIG. 1A along a third viewing angle. The terminal 10 is configured to be electrically connected to a contact matched with the terminal 10. At least one terminal 10 includes first member 11 and second member 12. The first member 11 is configured to conduct a current. The second member 12 is configured to apply a pressure to the first member 11. A ratio of a thickness of the first member 11 to a thickness of the second member 12 is greater than or equal to 0.1 and less than or equal to 20. The first member 11 provides surface-to-surface contact region A for the contact 20. In the contact region A, the first member 11 and the contact 20 mate with each other.

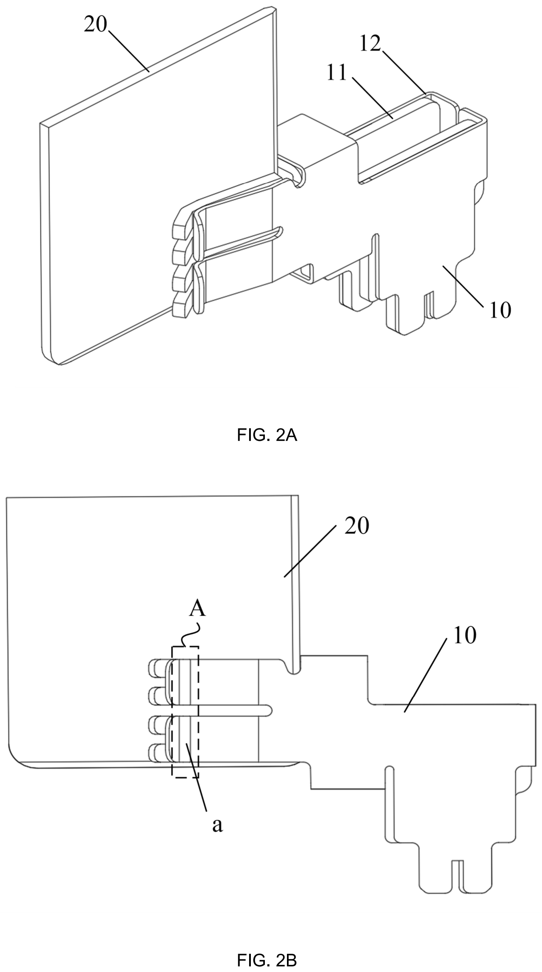

Specifically, a battery pack interface of an electric power tool may be provided with the terminal assembly. The terminal assembly may include a plurality of terminals. Each terminal is electrically connected to each terminal of the battery pack to achieve a power transmission function. FIG. 2A is a schematic structural view of the terminal and the contact in a clamped state. FIG. 2B is a schematic structural view of the terminal and the contact in the clamped state from another viewing angle. Referring to FIG. 2A and FIG. 2B, the contact 20 may be the terminal of the battery pack. When the terminal 10 is electrically connected to the contact 20, the contact 20 may be inserted into the terminal 10 to achieve plug-in connection between terminal 10 and the contact 20. Referring to FIGS. 1A-1D and FIG. 2, the terminal 10 may include the first member 11 and the second member 12. The first member 11 serves as a clamping member for the terminal 10, and is configured to clamp the contact 20 to achieve electrical connection with the contact 20. The second member 12 serves as a force applying member of the terminal 10, and is configured to apply the pressure to the first member 11, such that the first member 11 can apply a large clamping force to the contact 20, thereby achieving stable power transmission.

The first member 11 has first thickness D1. The second member 12 has second thickness D2. A ratio of the first thickness D1 to the second thickness D2 may be greater than or equal to 0.1 and less than or equal to 20, may also be greater than or equal to 0.5 and less than or equal to 10, or greater than or equal to 1 and less than or equal to 5. If the second member 12 is too thin, it cannot provide a sufficient pressure for the first member 11. If the second member 12 is too thick, it occupies an excessive space. Specifically, the thickness of the first member 11 and the thickness of the second member 12 may be set according to design requirements. For example, the thickness of the first member 11 and the thickness of the second member 12 may be set for the purpose of high-current transmission.

Exemplarily, in some embodiments, the thickness D1 of the first member 11 may be 0.6 mm, 0.8 mm, 0.9 mm, or 1 mm.

In some embodiments, the thickness D2 of the second member 12 may be 0.3 mm, 0.4 mm, 0.5 mm, or 0.6 mm.

The first member 11 may provide the surface-to-surface contact region for the contact 20, and the first member 11 and the contact 20 mate with each other in the contact region A. When the contact 20 is inserted into the terminal 10, a large contact area between the terminal 10 and the contact 20 can be achieved. This can effectively reduce a contact resistance to achieve high-current continuous transmission.

In some embodiments, a total area of the contact region A is greater than or equal to 4 mm². This can ensure the large contact area between the terminal 10 and the contact 20 to achieve the high-current continuous discharge capacity.

In some embodiments, a material of the first member 11 includes a copper alloy. A material of the second member 12 includes stainless steel. In this way, with excellent electrical conductivity of the copper alloy, the first member 11 achieves good electrical conductivity. With elasticity of the stainless steel, the second member 12 can apply the pressure to the first member 11, such that the first member 11 can apply the large clamping force to the contact 20.

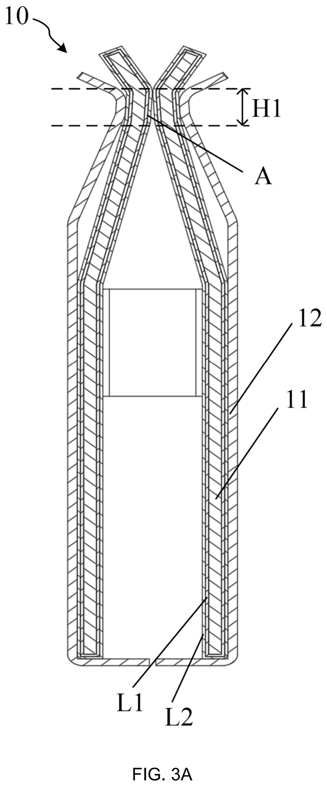

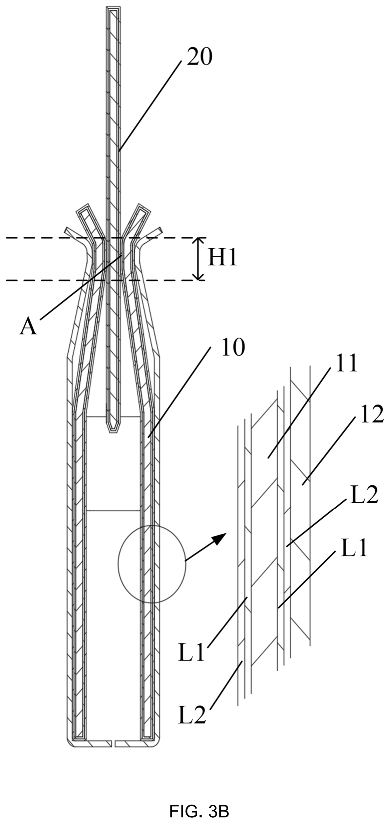

FIG. 3A is a schematic structural view of another terminal according to the present disclosure. FIG. 3B is a schematic view of the another terminal and the contact in a clamped state. Referring to FIG. 3A and FIG. 3B, the contact region A of the first member 11 with the contact 20 is nickel-plated, and/or, the contact region of the first member 11 with the contact 20 is silver-plated. FIG. 3A and FIG. 3B only exemplarily illustrate a case where two plated layers are formed in the contact region A of the first member 11 with the contact 20. First plated layer L1 may be a nickel layer, and second plated layer L2 may be a silver layer. Alternatively, the first plated layer L1 may be the silver layer, and the second plated layer L2 may be the nickel layer. In another possible embodiment, only one plated layer may be formed in the contact region A of the first member 11 with the contact 20. The plated layer may be either the nickel layer or the silver layer, and is not specifically limited in the present disclosure. Meanwhile, a plated layer may also be formed around the first member 11, and is not limited to the contact region A.

Referring to FIGS. 1A-2B, in some embodiments, the contact region A includes a plurality of disconnected contact sub-regions a. FIGS. 1A-2B illustrate a case where the contact region A includes two disconnected contact sub-regions a, but are not limited thereto. In this way, when the contact 20 is inserted into terminal 10, the contact 20 may come into contact with the contact sub-regions a to achieve the electrical connection. When one contact sub-region a breaks, the terminal 10 can come into contact with the contact 20 through other contact sub-regions a. This can extend the service life of the terminal 10.

In some embodiments, an area of each of the contact sub-regions a is greater than or equal to 0.5 mm². This can ensure that the contact sub-region a of the terminal 10 has a large contact area with the contact 20 to achieve the high-current continuous discharge capacity.

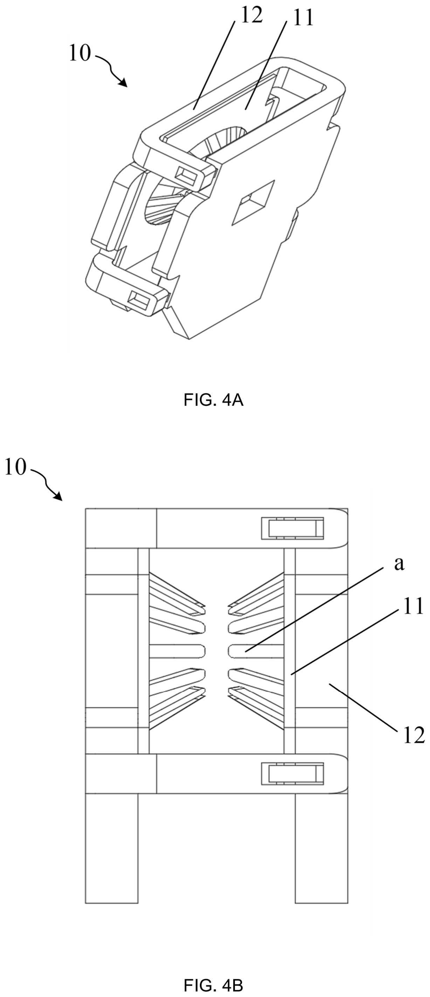

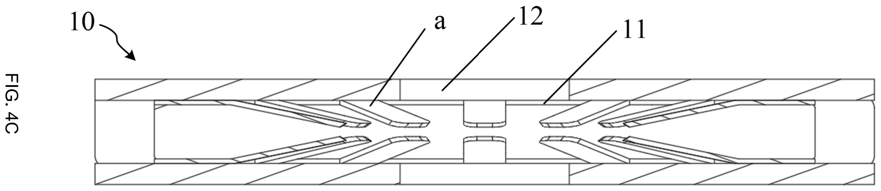

FIG. 4A is a schematic structural view of still another terminal according to the present disclosure. FIG. 4B is a schematic structural view of the terminal shown in FIG. 4A along a first viewing angle. FIG. 4C is a schematic structural view of the terminal shown in FIG. 4A along a second viewing angle. Referring to FIGS. 4A-4C, the terminal 10 includes first member 11 and second member 12. The first member 11 is provided with a plurality of contact sub-regions a that come into contact with the contact 20. In this case, the second member 12 may serve as a support substrate for the first member 11. The contact sub-regions a may be distributed in a circle, and each contact sub-region a may extend toward a center of the circle and the first member 11 on the opposite side. When the contact is inserted into the terminal 10, the contact sub-regions a on two sides can come into contact with the contact, thereby transmitting a current.

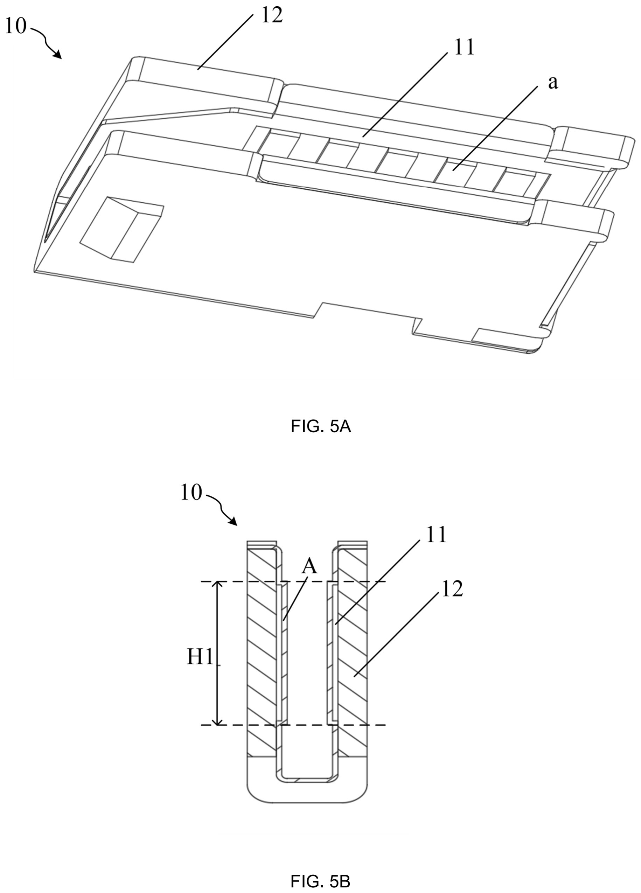

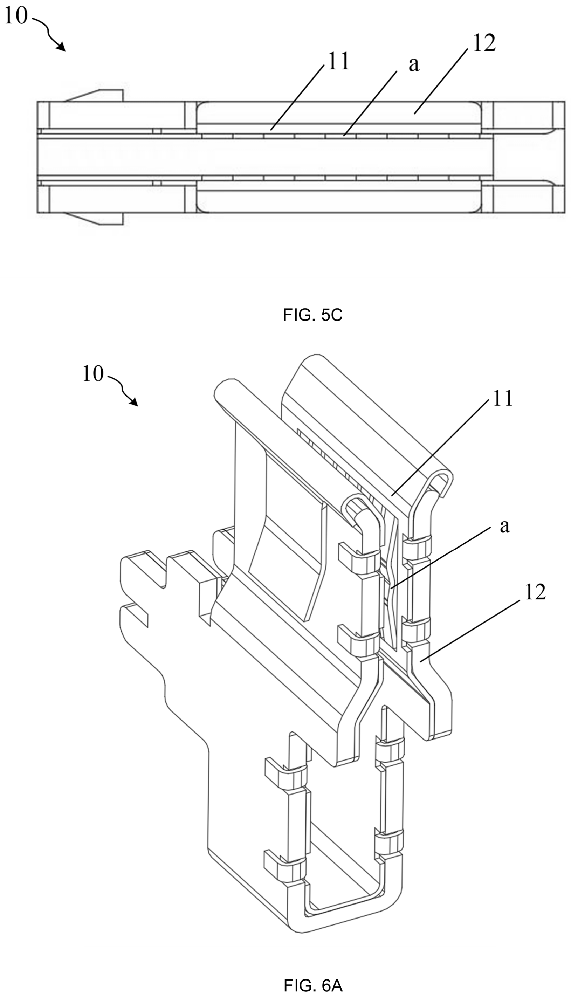

FIG. 5A is a schematic structural view of still another terminal according to the present disclosure. FIG. 5B is a schematic structural view of the terminal shown in FIG. 5A along a first viewing angle. FIG. 5C is a schematic structural view of the terminal shown in FIG. 5A along a second viewing angle. Referring to FIGS. 5A-5C, the terminal 10 includes first member 11 and second member 12. The first member 11 is provided with a plurality of contact sub-regions a that come into contact with the contact 20. In this case, the second member 12 may also serve as a support substrate for the first member 11. The contact sub-regions a may be sequentially arranged along a length direction of the terminal 10, and each contact sub-region a may be elastic. When the contact is inserted into the terminal 10, the contact sub-regions a on two sides can come into contact with the contact, and the contact is not damaged due to their elasticity, thereby transmitting a current.

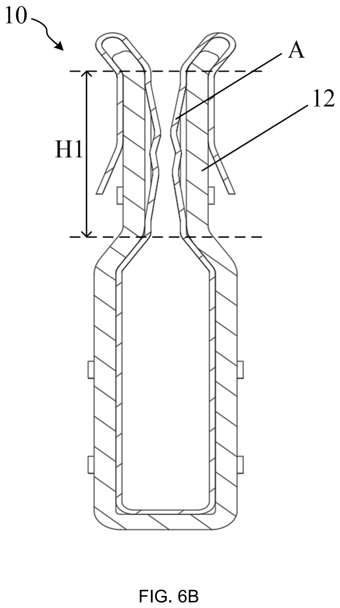

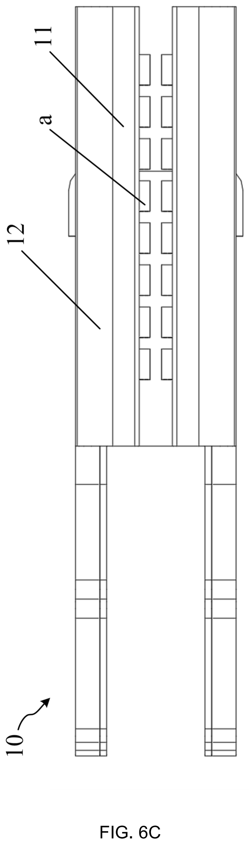

FIG. 6A is a schematic structural view of still another terminal according to the present disclosure. FIG. 6B is a schematic structural view of the terminal shown in FIG. 6A along a first viewing angle. FIG. 6C is a schematic structural view of the terminal shown in FIG. 6A along a second viewing angle. Referring to FIGS. 6A-6C, the terminal 10 includes first member 11 and second member 12. The first member 11 is provided with a plurality of contact sub-regions a that come into contact with the contact 20. The second member 12 may serve as a support substrate for the first member 11. The contact region A of the first member 11 with the contact may be provided with a plurality of contact sub-regions that do not come into contact with each other. Along an insertion direction of the contact, each contact sub-region a may be provided with a bending structure, such that the contact sub-region a can be elastic. When the contact is inserted into the contact sub-region a, the contact comes into contact with the contact sub-region a and squeezes the contact sub-region a, ensuring desirable contact and preventing damage to the contact sub-region a and the contact.

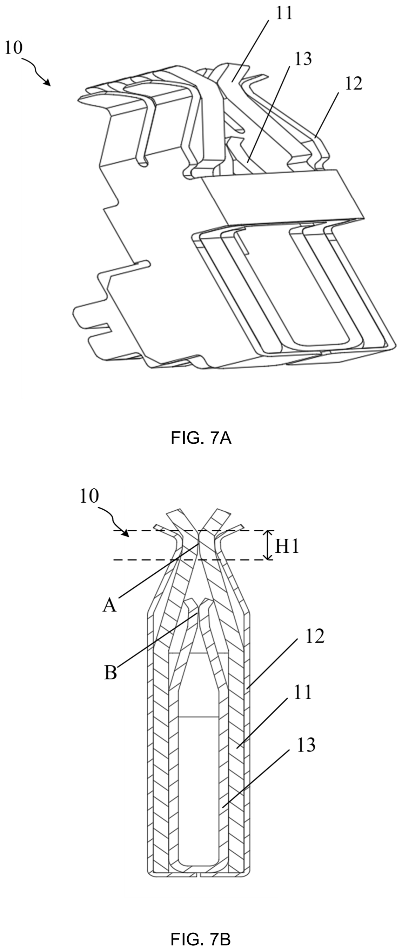

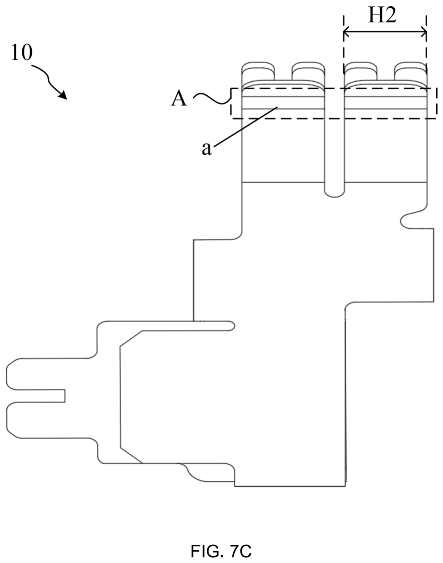

FIG. 7A is a schematic structural view of still another terminal according to the present disclosure. FIG. 7B is a schematic structural view of the terminal shown in FIG. 7A from a first viewing angle. FIG. 7C is a schematic structural view of the terminal shown in FIG. 7A from a second viewing angle. Referring to FIG. 7A and FIG. 7C, in some embodiments, the terminal 10 may further include third member 13. When the contact 20 is inserted into the terminal 10, the contact 20 can be clamped by the first member 11 and the third member 13 together. This can further increase the contact area of the terminal 10 with the contact 20, thereby reducing the contact resistance to enhance the overcurrent capacity. Meanwhile, when the terminal 10 includes the first member 11, the second member 12, and the third member 13, contact region A of the first member 11 with the contact may also include a plurality of disconnected contact sub-regions a, and contact region B of the third member 13 with the contact may also include a plurality of disconnected contact sub-regions. This can ensure that both the first member 11 and the third member 13 achieve surface contact with the contact to further improve the overcurrent capacity.

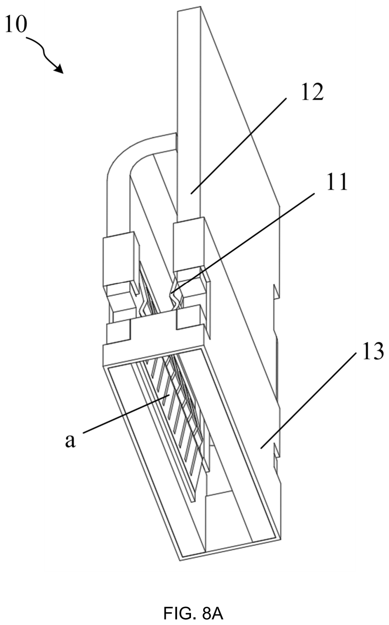

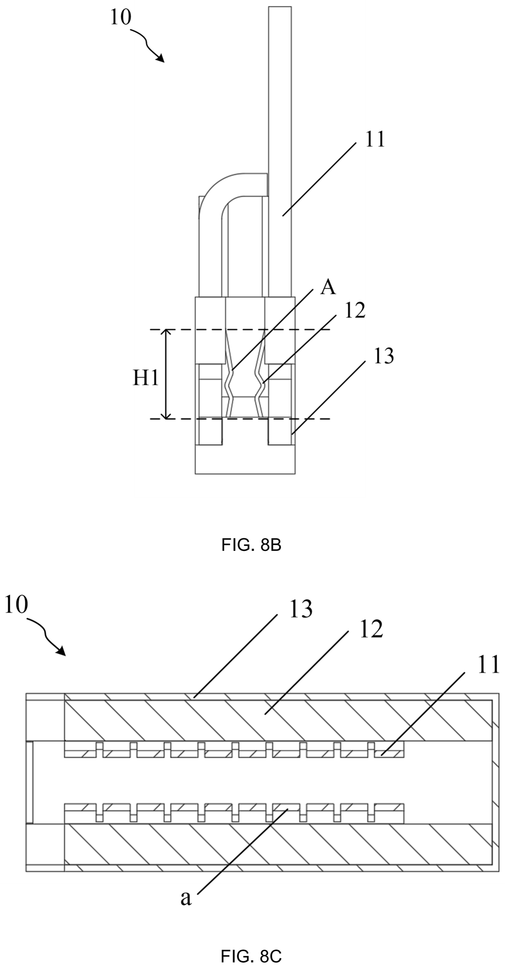

FIG. 8A is a schematic structural view of still another terminal according to the present disclosure. FIG. 8B is a schematic structural view of the terminal shown in FIG. 8A from a first viewing angle. FIG. 8C is a schematic structural view of the terminal shown in FIG. 8A from a second viewing angle. Referring to FIG. 8A and FIG. 8C, the terminal 10 includes first member 11, second member 12, and third member 13. In this case, the second member 12 serves as a support substrate for the first member 11. The third member 13 is configured to apply a pressure to the first member 11, such that the second member 12 can apply a pressure to the first member 11. The first member 11 provides a surface-to-surface contact region for the contact. The contact region may include a plurality of disconnected contact sub-regions a. Along an insertion direction of the contact, each contact sub-region a may be provided with a bending structure, such that the contact sub-region a can be elastic. When the contact is inserted into the contact sub-region a, the contact comes into contact with the contact sub-region a and squeezes the contact sub-region a, ensuring desirable contact and preventing damage to the contact sub-region a and the contact.

In some embodiments, a material of the third member 13 may be a copper alloy with good electrical conductivity.

In some embodiments, a contact region of the third member 13 with the contact 20 may also be nickel-plated and/or silver-plated, thereby achieving good electrical conductivity and protecting a body of the third member 13.

The terminal assembly provided by the present disclosure includes a plurality of terminals. Since the first member in the terminal is configured to be electrically connected to the contact to conduct the current, and the second member is configured to apply the pressure to the first member, the first member can apply a large clamping force to the contact, thereby achieving stable power transmission. The ratio of the first thickness to the second thickness can be greater than or equal to 0.1 and less than or equal to 20, the first member provides the surface-to-surface contact region for the contact, and the first member and the contact can mate with each other in the contact region, such that when the contact is inserted into the terminal, a large contact area between the terminal and the contact can be achieved. This can effectively reduce a contact resistance to achieve high-current continuous transmission.

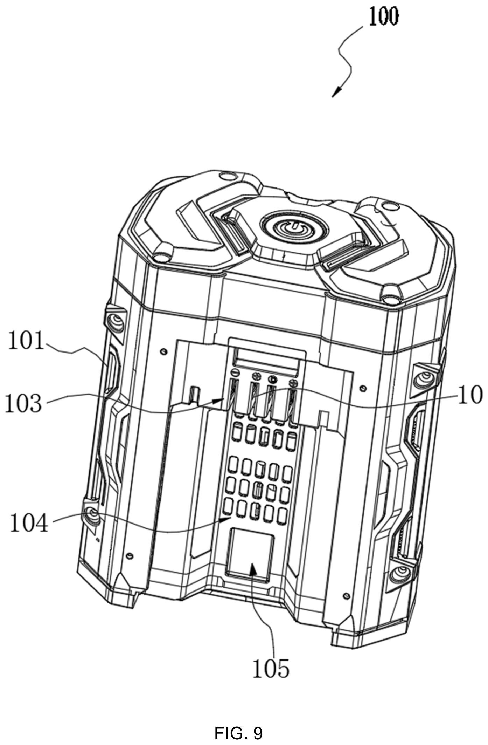

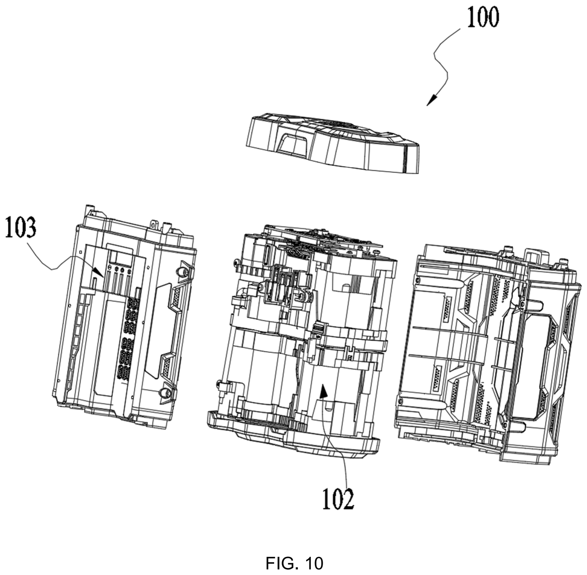

Based on the same inventive concept, the present disclosure further provides a battery pack. FIG. 9 is a schematic structural view of the battery pack according to the present disclosure. FIG. 10 is an exploded view of the battery pack according to the present disclosure. Referring to FIG. 9 and FIG. 10, the battery pack 100 includes: housing 101; a plurality of battery cells 102 that are accommodated in the housing 101; power tool interface 103 that includes a plurality of terminals 10, the terminal 10 being configured to be electrically connected to a contact matched with the terminal 10; and circuit board 104 that is accommodated in the housing 101, and electrically connected to the electric power tool interface 103. Controller 105 is disposed on the circuit board 104.

The housing 101 is configured to support and protect the plurality of battery cells 102. The plurality of battery cells 102 are configured to provide electric energy. The plurality of battery cells 102 are electrically connected to a battery pack interface of an electric power tool through the electric power tool interface 103. With the battery pack 100 for supplying electric energy to an electric motor of the electric power tool, normal operation of the electric power tool is ensured. The circuit board 104 may be provided with an integrated circuit. The controller 105 configured to control a charging process and a discharging process of the battery pack 100 may be disposed on the circuit board 104. For example, the battery pack 100 may be a lithium battery, or a nickel-cadmium battery, or a nickel-metal hydride battery. Certainly, the battery pack 100 may also be other types of secondary batteries, as long as it can supply the electric energy to the electric power tool, and no further examples will be provided herein.

The terminal 10 provided by any embodiment of the present disclosure may be disposed in the electric power tool interface 103. Referring to FIGS. 1 A-8C, the terminal 10 provides the surface-to-surface contact region A for the contact 20. In the contact region A, the terminal 10 and the contact 20 mate with each other. A maximum continuous discharge current of the battery pack 100 allowed by the controller 105 is greater than or equal to 100 A.

In some embodiments, a total area of the contact region is greater than or equal to 4 mm².

In some embodiments, the contact region A includes a plurality of disconnected contact sub-regions a.

In some embodiments, an area of each of the contact sub-regions a is greater than or equal to 0.5 mm².

In some embodiments, the terminal 10 includes first member 11 and second member 12. The first member 11 is configured to conduct a current. The second member 12 is configured to apply a pressure to the first member 11.

In some embodiments, the contact region A is disposed on the first member 11.

In some embodiments, a surface of the contact region A is nickel-plated, and/or, the surface of the contact region A is silver-plated.

According to the battery pack provided by the present disclosure, the electric power tool interface includes the terminal. The terminal provides the surface-to-surface contact region for the contact, and the terminal and the contact can mate with each other in the contact region, such that when the contact is inserted into the terminal, a large contact area between the terminal and the contact can be achieved. This can effectively reduce a contact resistance to achieve 100-A high-current continuous transmission.

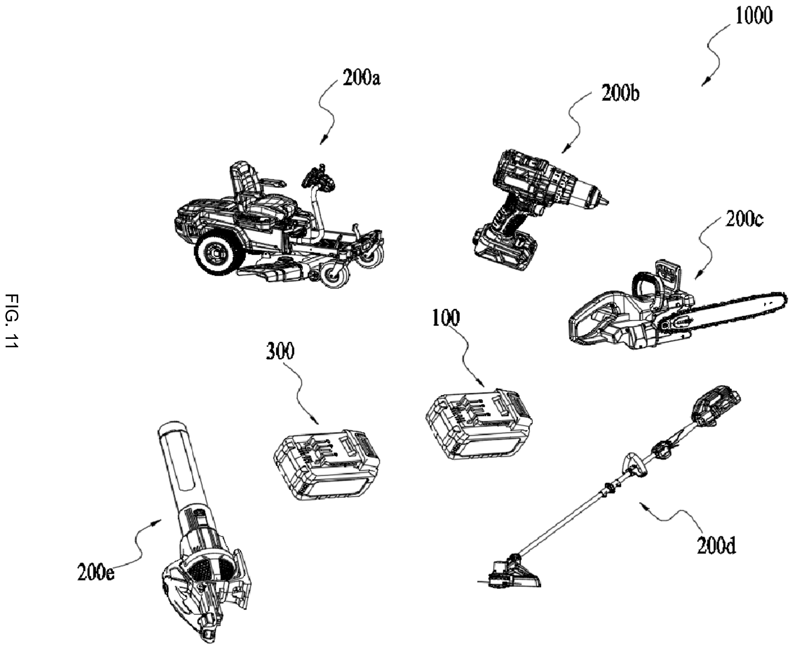

Based on the same inventive concept, the present disclosure further provides an electric power tool system. FIG. 11 is a system diagram of the electric power tool system according to the present disclosure. As shown in FIG. 11, the electric power tool system 1000 includes an electric power tool, first battery pack 300, and second battery pack 100. The electric power tool may be riding lawn mower 200a, electric drill 200b, chainsaw 200c, hand-held lawn mower 200d, and blower 200e. The first battery pack 300 and the second battery pack 100 may be configured to supply electric energy to the electric power tool.

For the sake of clarity, the chainsaw is taken as an example to describe the electric power tool of the present disclosure and its related technical solutions in detail.

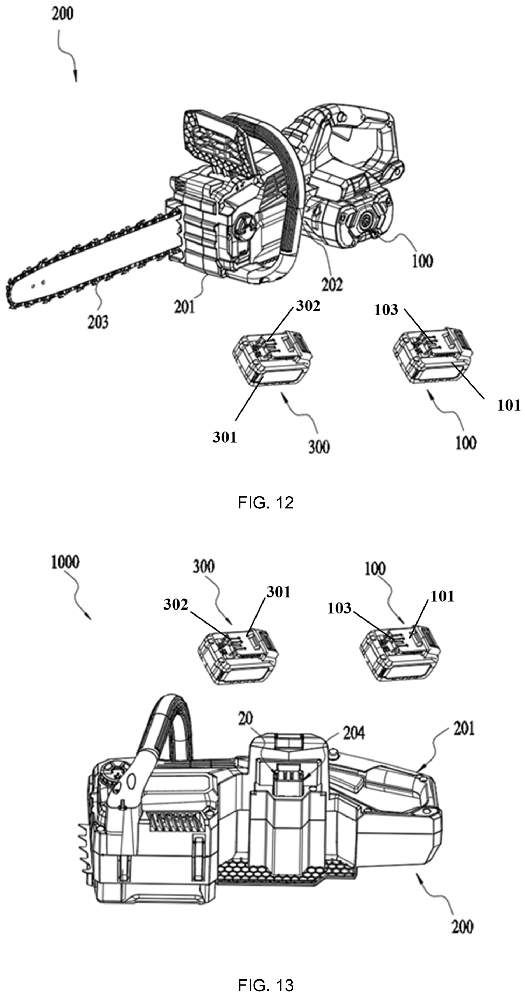

FIG. 12 is a system diagram of another power tool system according to the present disclosure, and specifically a system diagram when the electric power tool is the chainsaw. FIG. 13 is a schematic structural view of the electric power tool from another viewing angle. Referring to FIG. 12 and FIG. 13, the electric power tool 200 includes: machine housing 201 and electric motor 202 that is accommodated in the machine housing 201. The machine housing 201 is configured to support and protect the electric motor 202. The electric power tool 200 further includes working head 203 that is configured to be driven by the electric motor 202. When the electric power tool 200 is the chainsaw, the working head 203 is a chain, and can be driven by the electric motor 202 to accomplish a cutting function. The electric power tool 200 further includes battery pack interface 204 that includes a plurality of contacts 20, and is configured to be connected to a battery pack to supply power to the electric motor 202.

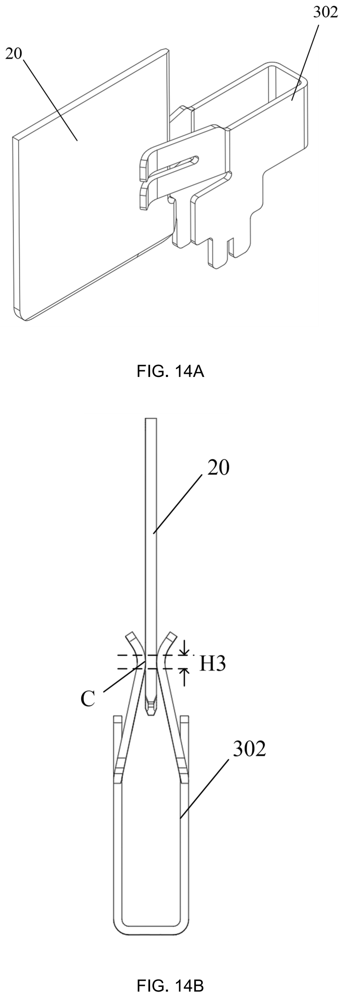

The first battery pack 300 is commercially available, and includes: housing 301; a plurality of battery cells (not shown in the figure) that are accommodated in the housing 301; and first power tool interface 302 that includes a plurality of first terminals. The first terminals are configured to be electrically connected to the contacts, respectively. FIG. 14A is a schematic structural view of a terminal and a contact in a clamped state according to a prior art. FIG. 14B is a schematic structural view of FIG. 14A from another viewing angle. Referring to FIG. 14A and FIG. 14B, in the prior art, the first terminal 302 provides linear first contact region C for the contact 20.

The second battery pack may be the battery pack 100 provided by any of the foregoing embodiments of the present disclosure, and includes: housing 101; a plurality of battery cells 102 that are accommodated in the housing 101; and second power tool interface 103 that includes a plurality of second terminals 10. The second terminals 10 are configured to be electrically connected to the contacts 20, respectively. Referring to FIGS. 1A-8C, FIG. 14A, and FIG. 14B, the second terminal 10 provides the surface-to-surface second contact region A for the contact 20. Width H1 of the second contact region A is greater than or equal to three times width H3 of the first contact region C.

Specifically, the battery pack interface 204 of the electric power tool 200 is compatible with both the first battery pack 300 and the second battery pack 100. The first terminal 302 of the first battery pack 300 can provide the linear first contact region C for the contact 20 of the battery pack interface 204, achieving line contact between the first terminal 302 and the contact 20. The line-contact connection method results in a small contact area to impair the continuous overcurrent capacity for high currents. The second terminal 10 of the second battery pack 100 provides the surface-to-surface second contact region A for the contact 20, such that a large contact area between the terminal 10 and the contact 20 can be achieved. This can effectively reduce a contact resistance to achieve high-current continuous transmission. Since the width H1 of the second contact region A is greater than or equal to three times the width H3 of the first contact region C, the second terminal 10 can be ensured to have a sufficiently large contact area with the contact 20 to further improve the overcurrent capacity.

In some embodiments, a height of the first contact region C is the same as height H2 of the second contact region A. While the width H1 of the second contact region A is greater than or equal to three times the width H3 of the first contact region C, the height of the first contact region C is the same as height H2 of the second contact region A, ensuring that a contact area of the second terminal 10 with the contact 20 is greater than a contact area of the first terminal with the contact, and ensuring that the second battery pack 100 can achieve a high continuous discharge current.

In some embodiments, a release date of the first battery pack is earlier than January 1, 2025. A release date of the second battery pack is later than January 1, 2025.

In some embodiments, the second terminal 10 includes first member 11 and second member 12. The first member 11 is configured to conduct a current. The second member 12 is configured to apply a pressure to the first member 11.

In some embodiments, a thickness of the first member 11 is 0.6 mm, 0.8 mm, 0.9 mm, or 1 mm.

In some embodiments, a thickness of the second member 12 is 0.3 mm, 0.4 mm, 0.5 mm, or 0.6 mm.

In some embodiments, a total area of the second contact region A is greater than or equal to 4 mm².

In some embodiments, a surface of the second contact region A is nickel-plated, and/or, the surface of the second contact region A is silver-plated.

In some embodiments, a maximum discharge current allowed by the electric power tool 200 is greater than or equal to 100 A.

According to the electric power tool system provided by the present disclosure, the electric power tool is compatible with both the first battery pack and the second battery pack. The first terminal of the first battery pack can provide the linear first contact region for the contact of the battery pack interface in the electric power tool, such that the first terminal comes in line contact with the contact, and low-current continuous transmission can be achieved between the first battery pack and the electric power tool. The second terminal of the second battery pack provides the surface-to-surface second contact region for the contact of the battery pack interface in the electric power tool, such that a large contact area between the terminal and the contact can be achieved. This can effectively reduce a contact resistance to achieve high-current continuous transmission between the second battery pack and the electric power tool. Furthermore, since the width of the second contact region is greater than or equal to three times the width of the first contact region, the current transmission capacity of the second battery pack can be greater than the current transmission capacity of the first battery pack, and the electric power tool is highly compatible with new and old battery packs.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A terminal assembly, comprising:
a plurality of terminals, wherein each of the plurality of terminals is configured to be electrically connected to a contact matched with the terminal; at least one of the plurality of terminals comprises a first member and a second member; the first member is configured to conduct a current, and the second member is configured to apply a pressure to the first member; and
a ratio of a thickness of the first member to a thickness of the second member is greater than or equal to 0.1 and less than or equal to 20; the first member provides a surface-to-surface contact region for the contact; and in the surface-to-surface contact region, the first member and the contact mate with each other.

2. The terminal assembly according to claim 1, wherein the thickness of the first member is 0.6 mm, 0.8 mm, 0.9 mm, or 1 mm.

3. The terminal assembly according to claim 1, wherein the thickness of the second member is 0.3 mm, 0.4 mm, 0.5 mm, or 0.6 mm.

4. The terminal assembly according to claim 1, wherein a material of the first member comprises a copper alloy; and a material of the second member comprises stainless steel.

5. The terminal assembly according to claim 1, wherein the surface-to-surface contact region of the first member with the contact is nickel-plated, and/or, the surface-to-surface contact region of the first member with the contact is silver-plated.

6. The terminal assembly according to claim 1, wherein the surface-to-surface contact region comprises a plurality of disconnected contact sub-regions.

7. The terminal assembly according to claim 1, wherein a total area of the surface-to-surface contact region is greater than or equal to 4 mm².

8. The terminal assembly according to claim 6, wherein an area of each of the plurality of disconnected contact sub-regions is greater than or equal to 0.5 mm².

9. A battery pack comprising the terminal assembly according to claim 1.

10. The battery pack according to claim 9, further comprising:
a housing;
a plurality of battery cells accommodated in the housing;
a controller, wherein a maximum continuous discharge current of the battery pack allowed by the controller is greater than or equal to 100 A.

11. An electric power tool configured to be powered by the battery pack according to claim 9.

12. The electric power tool according to claim 11, wherein a maximum discharge current allowed by the electric power tool is greater than or equal to 100 A.

13. The electric power tool according to claim 11, wherein the electric power tool is a chain saw.

14. The electric power tool according to claim 11, comprising a battery pack interface that includes a plurality of contacts matching with respective terminals.

15. The electric power tool according to claim 14, wherein the battery pack interface is also configured to connect to another battery pack through a line-contact connection method.
